# EUROPÄISCHE PATENTSCHRIFT

(11) **EP 0 983 906 B1**
(45) Veröffentlichungstag und Bekanntmachung des Hinweises auf die Patenterteilung: **12.10.2005**
(21) Anmeldenummer: 99114185.4
(22) Anmeldetag: 21.07.1999
(51) Int. Cl.: B60R 16/02

(54) **Verfahren und Steuereinrichtung zur Bedienung technischer Einrichtungen eines Fahrzeugs**
Procedure and control device for operating vehicle technical devices
Procédé et dispositf de commande pour l'utilisation de dispositifs techniques dans un véhicule

(30) Priorität: 29.08.1998 DE 19839466
(43) Veröffentlichungstag der Anmeldung: 08.03.2000
(60) Teilanmeldung: 05090050.5
(73) Patentinhaber: Volkswagen Aktiengesellschaft, 38436 Wolfsburg (DE)
(72) Erfinder: Crull, Torsten, 38531 Rötgesbüttel (DE)
(74) Vertreter: Effert, Bressel und Kollegen

(56) Entgegenhaltungen:
- WO-A-96/21185
- US-A- 4 827 520

## Beschreibung

Die Erfindung betrifft ein Verfahren zur Bedienung technischer Einrichtungen eines Fahrzeugs gemäß Oberbegriff des Anspruchs 1 sowie eine Steuereinrichtung zur Durchführung des Verfahrens nach einem der Ansprüche 1 bis 5.

Es ist allgemein bekannt, elektrische Einrichtungen durch eine aufeinanderfolgende Eingabe von Bedienanweisungen zu bedienen. Dabei können die Bedienanweisungen beispielsweise über die Tastatur eines elektrischen Gerätes oder über eine Infrarot-Fernbedienung eingegeben werden. Weiterhin ist es auch bekannt, einfache elektrische Funktionen durch akustische Signale auszulösen, beispielsweise den Weckton eines Weckers durch Zuruf abzustellen.

Aus der DE 40 12 337 A1 ist ein Verfahren zur Spracherkennung bekannt, mit dem die charakteristischen Merkmale unterschiedlicher Wörter identifiziert und mit den Merkmalen anderer Wörter eines Vokabulars verglichen werden können. In das Vokabular lassen sich auch neue Wörter mit den zugehörigen charakteristischen Merkmalen aufnehmen, so daß die Bedienperson sich ein individuelles Vokabular aufbauen kann. Die Bedeutung eines gesprochenen Worts läßt sich dann durch einen Vergleich mit dem Vokabular ermitteln, so daß das gesprochene Wort dann als geschriebenes Wort an einem Bildschirm zur Anzeige gebracht werden kann.

Aus der US-PS 4,509,133 ist ein weiteres Spracherkennungssystem bekannt, welches trainierbar ist, d. h. ein gesprochenes Wort wird so oft wiederholt, bis das von der Spracherkennungseinrichtung angezeigte Wort richtig ist. Das gesprochene Wort wird dann in codierter Form als Referenz für das entsprechende Wort in das Vokabular der Spracherkennungseinrichtung aufgenommen. Wird nun das Wort erneut in gesprochener Form eingegeben, so kann die Spracherkennungseinrichtung die korrekte Bedeutung des Wortes anhand des abgespeicherten Vokabulars bestimmen.

Aus der US-4,827,520 ist ein gattungsgemäßes Verfahren zur Bedienung technischer Einrichtungen mit Spracherkennung bekannt. Dabei wird eine technische Einrichtung durch Eingabe einer ersten Bedienanweisung in Form eines Sprachbefehls oder Betätigung einer zugeordneten Taste ausgewählt, wobei im Hinblick auf die Bedienung eines Telefons vorgeschlagen wird, bestimmte Telefonnummern unter einem Codewort abzuspeichem. Nach Auswahl des Telefons durch die erste Bedienanweisung kann dann der Nutzer durch sprachliche Eingabe des Codewortes die zugehörige Nummer aufrufen, die dann an das Telefon gesendet wird, wobei dann diese Nummer automatisch gewählt und das Telefon aktiviert wird.

Der Erfindung liegt die Aufgabe zugrunde, ein Verfahren zur Bedienung technischer Einrichtungen eines Fahrzeuges zu schaffen, bei dem der Bedienvorgang für die technischen Einrichtungen an die individuellen Anforderungen eines Bedieners leicht angepaßt werden kann.

Die Lösung dieser Aufgabe erhält man durch die im Anspruch 1 angegebenen Merkmale.

Weitere vorteilhafte Ausgestaltungen der Erfindung ergeben sich aus den Unteransprüchen. Die Bedienperson hat weiterhin die Möglichkeit unter einem frei wählbaren Codewort eine Befehlsfolge abzuspeichem, mit der die Seitenfenster und das Schiebedach eines Fahrzeugs geschlossen und darauf hin die Klimaanlage eingeschaltet werden kann. Das Codewort kann beispielsweise über die Tasten eines Bordcomputers oder per Sprache über ein Mikrofon eingegeben werden. Das Codewort bildet somit einen Makrobefehl, mit dem die zugehörige Befehlsfolge abgerufen und die Ausführung der zugehörigen Bedienvorgänge veranlaßt werden kann.

Die Eingabe der einzelnen Bedienanweisungen kann ebenfalls über eine Tastatur des Bordcomputers und/oder unter Verwendung eines Spracherkennungssystems erfolgen. Für unterschiedliche Bedienvorgänge können unterschiedliche Befehlsfolgen unter unterschiedlichen Codewörtem abgespeichert sein, so daß die Bedienperson beispielsweise über ein einziges Codewort eine bestimmte Telefonverbindung herstellen kann, während ein anderes Codewort den Tempomat einschaltet und die Fahrgeschwindigkeit auf einen gewünschten Wert einstellt.

Da die einzelnen Bedienanweisungen von der Bedienperson im Rahmen einer individuellen Befehlsfolge unter einem Codewort abgespeichert werden können, läßt sich die automatische Bedienung technischer Einrichtungen bequem an die individuellen Wünsche und Gewohnheiten der Bedienperson anpassen. Besonders vorteilhaft ist es, wenn die Befehlsfolge durch ein gesprochenes Codewort abrufbar ist, weshalb für das bevorzugte Verfahren ein Spracherkennungssystem verwendet wird.

Zur Durchführung des erfindungsgemäßen Verfahrens wird eine Steuereinrichtung mit einem Spracherkennungssystem mit den Merkmalen des Anspruchs 5 verwendet. Die zu jeder Befehlsfolgen gehörenden Codewörter werden in einem Makrospeicher abgelegt, der auch Teil eines umfassenderen Vokabelspeichers sein kann. Eine zentrale Steuereinheit vergleicht ein eingegebenes Codewort mit den abgespeicherten Codewörtem und veranlaßt über ein Bedienschnittstelle die zu dem eingegebenen Codewort zugehörenden aufeinanderfolgenden Bedienvorgänge. Die Bedienschnittstelle kann zur Betätigung eines Autotelefons und/oder zur Betätigung unterschiedlicher elektrischer Einrichtungen eines Fahrzeugs geeignet sein, so daß mit der Steuereinrichtung unterschiedliche Bedienvorgänge jeweils durch Eingabe eines einzigen Codeworts veranlaßt werden können.

Die über einen Sprachwandler eingegebenen gesprochenen Eingaben oder die über eine Tastatur vorgenommenen Eingaben können von dem Sprachwandler als Digitalwärter der zentralen Steuereinheit zugeführt werden. Damit die zentrale Steuereinheit einen Dialog mit der Bedienperson führen kann, ist es vorteilhaft, wenn die zentrale Steuereinheit mit einem Dialogsystem verbunden ist, welches Anweisungen für die Eingabe der Bedienvorgänge an eine Ausgabeeinheit liefert. Die Ausgabeeinheit kann die Anweisungen visuell, beispielsweise an einem Display, oder akustisch über einen Lautsprecher wiedergeben. In Verbindung mit dem Dialogsystem können auch kompliziertere Abläufe von der Bedienperson problemlos durchgeführt werden. Die von der Bedienperson durchgeführten Schritte werden einzeln vorgegeben und können gegebenenfalls vom Dialogsystem auch zusätzlich noch näher erläutert werden.

Die Steuereinrichtung ist vorzugsweise über eine Bedienschnittstelle mit den zu betätigenden elektrischen Antriebsmotoren und/oder dem Autotelefon verbunden, wobei die Bedienschnittstelle die von einer zentralen Steuereinheit ausgegebenen Befehlsfolgen in geeignete elektrische Steuersignale zur Betätigung der entsprechenden elektrischen Einrichtungen umwandelt. An die Bedienschnittstelle können sehr unterschiedliche elektrische Einrichtungen angeschlossen sein, so daß die Steuereinrichtung sehr universell für die unterschiedlichen Bedienvorgänge einsetzbar ist.

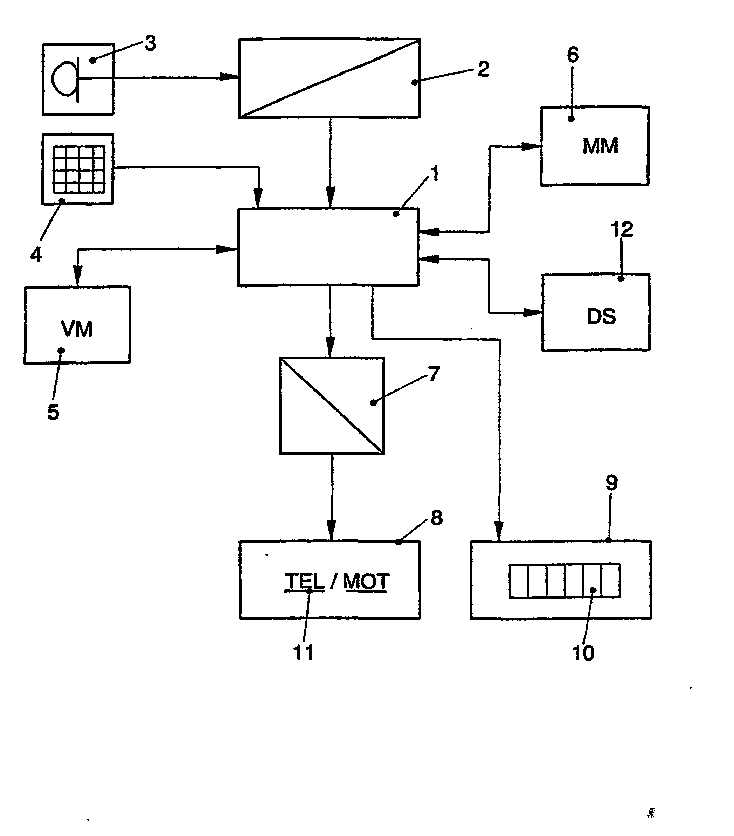

Die Erfindung wird nachfolgend anhand eines in der Zeichnung dargestellten Blockschaltbildes einer Steuereinrichtung mit einem Spracherkennungssystem näher erläutert.

Das in der Zeichnung dargestellte Ausführungsbeispiel einer Steuereinrichtung mit einem Spracherkennungssystem besitzt eine zentrale Steuereinheit 1, die eingangsseitig über einen Sprachwandler 2 mit einem Mikrofon 3 verbunden ist. An einem zweiten Eingang der zentralen Steuereinheit 1 ist eine Tastatur 4 angeschlossen, so daß über die Tastatur 4 eine manuelle Eingabe und über das Mikrofon 3 eine gesprochene Eingabe erfolgen kann.

Die zentrale Steuereinheit 1 ist außerdem mit einem Vokabularspeicher 5 und mit einem Makrospeicher 6 verbunden. Im Vokabularspeicher 5 kann ein Standardvokabular in digitaler Form abgespeichert sein, welches zur Identifizierung der über das Mikrofon 3 eingegebenen Wörter herangezogen wird. Die Identifizierung der eingegebenen gesprochenen Bedienanweisungen kann dabei in an sich bekannter Weise durch einen Vergleich der charakteristischen Merkmale des eingegebenen Worts mit den im Vokabularspeicher 5 abgelegten Wörtern erfolgen. Das im Vokabularspeicher 5 enthaltene Standardvokabular kann von einer Bedienperson auch erweitert werden.

Im Makrospeicher 6 sind Befehlsfolgen unter zugeordneten Codewörtern abgespeichert sein. Wird ein Codewort beispielsweise über das Mikrofon 3 in Sprachform eingegeben, so kann die zentrale Spracheinheit 1 die Übereinstimmung mit dem entsprechenden Codewort im Makrospeicher 6 feststellen und die zugehörige Befehlsfolge abrufen, mit der dann beispielsweise sämtliche Seitenfenster und das Schiebedach eines Fahrzeugs geschlossen werden. Zu diesem Zweck gibt die zentrale Steuereinheit ausgangsseitig über eine Bedienschnittstelle 7 die dazu erforderlichen Steuersignale an die zu betätigenden elektrischen Einrichtung 8 ab. In dem gewählten Beispiel sind die elektrischen Einrichtung 8 die Antriebsmotoren für die Seitenfenster und das Schiebedach.

Die zentrale Steuereinheit 1 ist außerdem mit einer Ausgabeeinheit 9 ausgangsseitig verbunden, über die akustische und/oder visuelle Informationen der Bedienperson übermittelt werden. Die Ausgabeeinheit 9 kann zu diesem Zweck mit einem Display 10 und einer hier nicht dargestellten Lautsprecheranordnung bestückt sein.

Anhand eines Bedienbeispiels zur Herstellung einer Fernsprechverbindung wird nun das erfindungsgemäße Verfahren näher erläutert. Die Telefoneinrichtung 11, die einen Teil der steuerbaren elektrischen Einrichtung 8 darstellt, soll sprachgesteuert bedient werden.

Über das Mikrofon 3 wird zunächst das Wort "Telefon" eingegeben, welches von der zentralen Steuereinheit 1 identifiziert wird. Daraufhin schaltet die Steuereinheit 1 das Autotelefon 11 ein. Über das Mikrofon 3 kann dann die gewünschte Telefonnummer eingegeben werden, wobei die zentrale Steuereinheit 1 wiederum jedem gesprochenen Zahlwort eine entsprechende Zahl zuordnet und diese an das Autotelefon 11 als Wählinformationen weitergibt.

Als nächster Schritt kann von der Bedienperson das Wort "wählen" eingegeben werden, welches wiederum von der zentralen Steuereinheit 1 identifiziert wird, worauf von der zentralen Steuereinheit 1 der Wählvorgang am Autotelefon 1 initiiert wird.

Sollten sich bei der Eingabe der einzelnen gesprochenen Bedienanweisungen für das Spracherkennungssystem irgendwelche Probleme ergeben, so kann über ein mit der zentralen Steuereinheit 1 verbundenes Dialogsystem 12 eine Benutzerführung erfolgen. Das Dialogsystem 12 kann zu diesem Zweck Informationen an die Bedienperson über die Ausgabeeinheit 9 abgeben, um beispielsweise die Bedienperson zur nochmaligen Eingabe aufzufordern.

Die zum Aufbau der Wählverbindung erforderlichen, über das Mikrofon 3 eingegebenen Bedienanweisungen sind als eine Befehlsfolge in codierter Form im Makrospeicher 6 unter einem Codewort abgespeichert. Beispielsweise können die zum Aufbau der Telefonverbindung zum eigenen Sekretariat notwendigen Bedienanweisungen unter dem Codewort "Sekretariat" im Makrospeicher 6 abgelegt werden. Wünscht nun eine Bedienperson eine Telefonverbindung zum eigenen Sekretariat, so kann der gesamte Ablauf durch Eingabe des Codeworts "Sekretariat" aufgerufen werden.

Das Dialogsystem 12 kann am Ende einer Eingabe von mehreren Bedienanweisungen die Bedienperson fragen, ob die Bedienanweisungen als Befehlsfolge unter einem Codewort abgespeichert werden sollen. Antwortet die Bedienperson mit ja", so fragt das Dialogsystem 12 über die Ausgabeeinheit 9 nach dem Codewort. Die Bedienperson gibt dann das entsprechende individuelle Codewort ein.

Die Eingabe des Codeworts kann ebenso wie die Eingabe der Bedienanweisungen über das Mikrofon 3 und/oder über die Tastatur 4 erfolgen.

Das Spracherkennungssystem mit dem Makrospeicher 6 ermöglicht das Ablegen unterschiedlicher Befehlsfolgen, die zur Bedienung unterschiedlicher komplexer Vorgänge geeignet sind. Jeder Befehlsfolge wird ein individuelles Codewort zugeordnet, so daß die entsprechenden Bedienvorgänge ggf. von anderen Personen nicht ohne Kenntnis des Codeworts abgerufen werden können. Die eingegebenen Bedienvorgänge können somit vor unerlaubtem Zugriff geschützt werden.

## Patentansprüche

1. Verfahren zur Bedienung mehrerer technischer Einrichtungen eines Fahrzeugs, wobei mindestens eine technische Einrichtung ein Autotelefon ist, wobei Bedienanweisungen mit gespeicherten Befehlen verglichen werden und bei vorhandener ausreichender Übereinstimmung zwischen einer Bedienanweisung und einem gespeicherten Befehl der entsprechende Befehl dieser Bedienanweisung zugeordnet und ausgeführt wird, wobei zur Durchführung eines vollständigen Bedienvorganges des Autotelefons (11) mittels einer Bedienanweisung das Autotelefon (11) gegenüber den anderen technischen Einrichtungen ausgewählt und mittels mindestens einer weiteren Bedienanweisung eine Telefonverbindung hergestellt wird, wobei mehrere aufeinanderfolgende Bedienanweisungen unter einem einzigen frei wählbaren Codewort als Befehlsfolge abgespeichert werden, und dass dann über eine Eingabe des Codeworts alle Bedienanweisungen der Befehlsfolge selbsttätig veranlasst werden,
**dadurch gekennzeichnet, dass**
sämtliche Bedienanweisungen zur Durchführung des vollständigen Bedienvorganges unter dem frei wählbaren Codewort abgespeichert werden.

2. Verfahren nach Anspruch 1, **dadurch gekennzeichnet, dass** mittels eines weiteren Codewortes vollständige Bedienvorgänge mehrerer unterschiedlicher technischer Einrichtungen durchgeführt werden.

3. Verfahren nach Anspruch 1 oder 2, **dadurch gekennzeichnet**, d ass z um I nitiieren unterschiedlicher vollständiger Bedienvorgänge eine der Anzahl der Bedienvorgänge entsprechende Anzahl von unterschiedlichen Codewörtern abgespeichert ist.

4. Verfahren nach einem der Ansprüche 1 bis 3, **dadurch gekennzeichnet, dass** die Bedienanweisungen und/oder das zu einem vollständigen Bedienvorgang gehörende Codewort in Sprachform eingegeben werden.

5. Verfahren nach einem der Ansprüche 1 bis 3, **dadurch gekennzeichnet, dass** die Bedienanweisungen und/oder das zu einem vollständigen Bedienvorgang gehörende Codewort manuell eingegeben werden.

6. Steuereinrichtung zur Durchführung des Verfahrens nach einem der vorhergehenden Ansprüche mit einem Spracherkennungssystem, das in einer zentralen Steuereinheit (1) die in einem Speicher (5, 6) als Wörter abgelegten Befehle mit eingegebenen Bedienanweisungen vergleicht, wobei zur Durchführung eines vollständigen Bedienvorganges des Autotelefons (11) mittels einer Bedienanweisung das Autotelefon (11) gegenüber den anderen technischen Einrichtungen ausgewählt und mittels mindestens einer weiteren Bedienanweisung eine Telefonverbindung hergestellt wird, wobei mehrere aufeinanderfolgende Bedienanweisungen unter einem einzigen frei wählbaren Codewort als Befehlsfolge in einem Makrospeicher (6) abgespeichert sind, der mit der zentralen Steuereinheit verbunden ist, wobei bei ausreichender Übereinstimmung eines eingegebenen mit einem abgespeicherten Codewort die zentrale Steuereinheit (1) über eine Bedienschnittstelle (7) die aufeinanderfolgenden Bedienanweisungen durchführt,
**dadurch gekennzeichnet, dass**
unter dem frei wählbaren Codewort sämtliche Bedienanweisungen zur Durchführung des vollständigen Bedienvorganges abgespeichert sind, so dass bei Eingabe des Codewortes die technische Einrichtung ausgewählt und angesteuert wird.

7. Steuereinrichtung nach Anspruch 6, **dadurch gekennzeichnet, dass** die Bedienanweisung und/oder das Codewort bzw. weitere Codewörter über einen Sprachwandler (2), der die gesprochenen Eingaben in Digitalwörter umwandelt, der zentralen Steuereinheit (1) zugeführt werden.

8. Steuereinrichtung nach einem der Ansprüche 6 oder 7, **dadurch gekennzeichnet, dass** die zentrale Steuereinheit (1) mit einem Dialogsystem (12) verbunden ist, das Anweisungen für die Eingabe der Bedienanweisungen bzw. des Codewortes an eine Ausgabeeinheit (9) liefert.

9. Steuereinrichtung nach einem der Ansprüche 6 bis 8, **dadurch gekennzeichnet, dass** die Ausgabeeinheit (9) als eine visuelle Anzeige und/oder eine akustische Ausgabeeinrichtung ausgebildet ist.

10. Steuereinrichtung nach einem der Ansprüche 6 bis 9, **dadurch gekennzeichnet, dass** die Bedienschnittstelle (7) ausgangsseitig mit dem Autotelefon (11) und mit elektrischen Antriebsmotoren und/oder mit anderen elektrischen Einrichtungen des Fahrzeugs verbunden ist.

## Claims

1. Method for operating a plurality of technical devices of a vehicle, with at least one technical device being a car telephone, wherein operator control instructions are compared with stored commands and wherein there is sufficient correspondence between an operator control instruction and a stored command the corresponding command is assigned to this operator control instruction and executed, wherein, in order to carry out a complete operator control procedure of the car telephone (11) by means of an operator control instruction, the car telephone (11) is selected as against the other technical devices and a telephone connection is set up by means of at least one further operator control instruction, wherein a plurality of successive operator control instructions are stored as a command sequence under a single, freely selectable codeword, and in that all the operator control instructions of the command sequence are then brought about automatically by inputting the codeword, **characterized in that** all the operator control instructions for carrying out the complete operator control procedure are stored under the freely selectable codeword.

2. Method according to Claim 1, **characterized in that** complete operator control procedures of a plurality of different technical devices are carried out by means of a further codeword.

3. Method according to Claim 1 or 2, **characterized in that**, in order to initiate different complete operator control procedures, a number of different codewords which corresponds to the number of operator control procedures is stored.

4. Method according to one of Claims 1 to 3, **characterized in that** the operator control instructions and/or the codeword associated with a complete operator control procedure are input in speech form.

5. Method according to one of Claims 1 to 3, **characterized in that** the operator control instructions and/or the codeword which is associated with a complete operator control procedure are input manually.

6. Control device for carrying out the method according to one of the preceding claims, having a speech recognition system which compares, in a central control unit (1), the commands stored in a memory (5, 6) as words with operator control instructions which have been input, wherein, in order to carry out a complete operator control procedure of the car telephone (11) by means of an operator control instruction, the car telephone (11) is selected as against the other technical devices, and a telephone connection is set up by means of at least one further operator control instruction, when a plurality of successive operator control instructions are stored under a single, freely selectable codeword as a command sequence in a macromemory (6) which is connected to the central control unit, wherein, when there is sufficient correspondence between a codeword which has been input and a codeword which is stored, the central control unit (1) carries out the successive operator control instructions via an operator control interface (7), **characterized in that** all the operator control instructions for carrying out the complete operator control procedure are stored under the freely selectable codeword so that when the codeword is input the technical device is selected and actuated.

7. Control device according to Claim 6, **characterized in that** the operator control instruction and/or the codeword or further codewords are fed to the central control unit (1) via a speech converter (2) which converts the spoken inputs into digital words.

8. Control device according to one of Claims 6 or 7, **characterized in that** the central control unit (1) is connected to a dialogue system (12) which supplies instructions for inputting the operator control instructions or the code word to an output unit (9).

9. Control device according to one of Claims 6 to 8, **characterized in that** the output unit (9) is embodied as a visual display and/or an acoustic output device.

10. Control device according to one of Claims 6 to 9, **characterized in that** the operator control interface (7) is connected at the output end to the car telephone (11) and to electric drive motors and/or to other electric devices of the vehicle.

## Revendications

1. Procédé pour commander plusieurs dispositifs techniques d'un véhicule, au moins un dispositif technique étant un téléphone de voiture, les instructions de commande étant comparées avec des instructions mémorisés et, en présence d'une concordance suffisante entre une instruction de commande et une instruction mémorisée, l'instruction correspondante est affectée à cette instruction de commande puis exécutée, avec lequel, pour exécuter une opération de commande complète du téléphone de voiture (11) le téléphone de voiture (11) est sélectionné parmi les autres dispositifs techniques au moyen d'une instruction de commande et une liaison téléphonique est établie au moyen d'au moins une instruction de commande supplémentaire, plusieurs instructions de commande successives étant enregistrées sous la forme d'une série d'instructions sous un mot de code unique pouvant être choisi librement, et toutes les instructions de commande de la série d'instructions étant alors ordonnées automatiquement en saisissant le mot de code, **caractérisé en ce que** toutes les instructions de commande destinées à exécuter l'opération de commande complète sont enregistrées sous le mot de code pouvant être sélectionné librement.

2. Procédé selon la revendication 1, **caractérisé en ce que** les opérations de commande complètes de plusieurs dispositifs techniques différents sont exécutées au moyen d'un mot de code supplémentaire.

3. Procédé selon la revendication 1 ou 2, **caractérisé en ce que** pour initier différentes opérations de commande complètes, un certain nombre de mots de code différents est enregistré, lequel correspond au nombre d'opérations de commande.

4. Procédé selon l'une des revendications 1 à 3, **caractérisé en ce que** les instructions de commande et/ou le mot de code faisant partie d'une opération de commande complète sont saisis sous forme vocale.

5. Procédé selon l'une des revendications 1 à 3, **caractérisé en ce que** les instructions de commande et/ou le mot de code faisant partie d'une opération de commande complète sont saisis sous forme manuelle.

6. Dispositif de commande pour mettre en oeuvre le procédé selon l'une des revendications précédentes avec un système de reconnaissance vocale qui compare dans une unité de commande centrale (1) les instructions enregistrées sous la forme de mots dans une mémoire (5, 6) avec des instructions de commande saisies, avec lequel, pour exécuter une opération de commande complète du téléphone de voiture (11) le téléphone de voiture (11) est sélectionné parmi les autres dispositifs techniques au moyen d'une instruction de commande et une liaison téléphonique est établie au moyen d'au moins une instruction de commande supplémentaire, plusieurs instructions de commande successives étant enregistrées dans une mémoire de macro (6), qui est reliée à l'unité de commande centrale, sous la forme d'une série d'instructions sous un mot de code unique pouvant être sélectionné librement, l'unité de commande centrale (1) exécutant les instructions de commande successives par le biais d'une interface de commande (7) en cas de concordance suffisante d'un mot de code saisi avec un mot de code enregistré, **caractérisé en ce que** toutes les instructions de commande destinées à exécuter l'opération de commande complète sont enregistrées sous le mot de code pouvant être sélectionné librement de telle sorte que le dispositif technique est sélectionné et commandé lors de la saisie du mot de code.

7. Dispositif de commande selon la revendication 6, **caractérisé en ce que** l'instruction de commande et/ou le mot de code ou les mots de code supplémentaires sont acheminés à l'unité de commande centrale (1) par le biais d'un convertisseur vocal (2) qui convertit les saisies vocales en mots numériques.

8. Dispositif de commande selon la revendication 6 ou 7, **caractérisé en ce que** l'unité de commande centrale (1) est reliée à un système de dialogue (12) qui délivre à une unité de sortie (9) des instructions pour la saisie des instructions de commande ou des mots de code.

9. Dispositif de commande selon l'une des revendications 6 à 8, **caractérisé en ce que** l'unité de sortie (9) est réalisée sous la forme d'une indication visuelle et/ou d'un dispositif de sortie sonore.

10. Dispositif de commande selon l'une des revendications 6 à 9, **caractérisé en ce que** l'interface de commande (7) est reliée du côté de sa sortie avec le téléphone de voiture (11) et avec des moteurs d'entraînement électriques et/ou avec d'autres dispositifs électriques du véhicule.
